(19) Europäisches Patentamt
European Patent Office
Office européen des brevets

(11) **EP 1 984 648 B1**

(12) **EUROPÄISCHE PATENTSCHRIFT**

(45) Veröffentlichungstag und Bekanntmachung des Hinweises auf die Patenterteilung:
**29.04.2009 Patentblatt 2009/18**

(21) Anmeldenummer: **06806640.6**

(22) Anmeldetag: **31.10.2006**

(51) Int Cl.:
***F16G 13/04*** *(2006.01)*

(86) Internationale Anmeldenummer:
**PCT/EP2006/010474**

(87) Internationale Veröffentlichungsnummer:
**WO 2007/093202 (23.08.2007 Gazette 2007/34)**

(54) **ZAHNKETTE MIT OPTIMIERTEM KETTENGELENK UND VERGRÖSSERTEM AUSSENFLANKENWINKEL**

TOOTHED CHAIN WITH OPTIMISED CHAIN JOINT AND INCREASED EXTERNAL FLANK ANGLE

CHAÎNE DENTÉE COMPORTANT UNE ARTICULATION OPTIMISÉE ET PRÉSENTANT UN ANGLE D'ENGRENAGE EXTÉRIEUR AUGMENTÉ

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.02.2006 DE 202006002416 U**

(43) Veröffentlichungstag der Anmeldung:
**29.10.2008 Patentblatt 2008/44**

(73) Patentinhaber: **IWIS Motorsysteme GmbH & Co. KG**
**81369 München (DE)**

(72) Erfinder:
• **BONGARD, Andreas**
**82396 Paehl (DE)**
• **HIRSCHMANN, Volker**
**82256 Fürstenfeldbruck (DE)**
• **WELKE, Lutz**
**85049 Ingolstadt (DE)**

(74) Vertreter: **Grünecker, Kinkeldey, Stockmair & Schwanhäusser**
**Anwaltssozietät**
**Leopoldstraße 4**
**80802 München (DE)**

(56) Entgegenhaltungen:
| | |
|---|---|
| **EP-A2- 1 293 704** | **DE-U1- 20 111 494** |
| **DE-U1- 20 213 990** | **GB-B- 2 373 833** |
| **US-A- 4 759 740** | **US-A- 5 427 580** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Zahnkette mit sich abwechselnden und jeweils mittels eines Kettengelenks miteinander verbundenen Innen- und Außenkettengliedern. Bei einer Ausführungsform der Erfindung weisen die Innenkettenglieder mindestens eine Innenlasche und mindestens zwei sich quer durch diese erstreckende Gelenkhülsen auf und die Außenkettenglieder weisen mindestens zwei Außenlaschen und mindestens zwei quer durch diese erstreckende Gelenkbolzen auf, wobei sich zum Bilden eines Kettengelenks jeweils ein Gelenkbolzen des Außenkettengliedes durch eine Gelenkhülse des Innenkettengliedes erstreckt.

Eine solche Zahnkette ist z.B. aus der GB 2373833 B bekannt. Die Innenkettenglieder bestehen bei dieser Kette aus zwei parallel zueinander angeordneten Innenzahnlaschen, die mittels zweier Gelenkhülsen im parallelen Abstand zueinander befestigt sind. Hierzu sind die Gelenkhülsen in die Zahnlaschen eingepresst. Die Außenkettenglieder bestehen aus zwei parallel zueinander angeordneten Zahnlaschen und außenliegenden Führunglaschen. Zumindest die Führungslaschen sind mittels zweier in diese hineingepressten Gelenkbolzen verbunden. Ein Gelenkbolzen des Außenkettengliedes erstreckt sich mit geringem Spiel durch jeweils eine Hülse des Innenkettengliedes. Derartige Zahnketten werden mit einem Außenflankenwinkel von 60° hergestellt. Dieser Winkel ist insofern entscheidend, da die auf dem Kettenrad aufsitzende Kette mit ihren Außenflanken mit den Zähnen des Kettenrads in Berührung steht. Solche Zahnketten kommen insbesondere bei Steuerkettentrieben von Automobilmotoren zum Einsatz. Aufgrund des in diesem Bereich vorliegenden hohen Kostendrucks liegen ständig Bestrebungen vor, die Haltbarkeit derartiger Ketten zu verbessern, ohne eine Verteuerung herbeizuführen. Des Weiteren befinden sich Zahnketten in diesem Einsatzgebiet an der Grenze ihrer Belastbarkeit, so dass bereits geringfügige Leistungssteigerungen an einem Motor zur vollkommenen Neuauslegung des gesamten Kettentriebs führen können. Demnach führen auch kleinere Lebensdauerverbesserungen der Zahnkette zu einem erheblichen Vorteil.

Aus der EP 1293704 A2 ist eine Zahnkette ohne Gelenkhülsen bekannt, bei der ein an den Gelenkbolzen gerichteter Auftreffmoment reduziert ist: Hierzu wird bevorzugt ein Außenflankenwinkel $\alpha$ von $\geq 64°$ und $\leq 68°$ verwendet.

Es ist daher die Aufgabe der vorliegenden Erfindung, eine Zahnkette bereitzustellen, die eine verbesserte Lebensdauer aufweist und zu einer vorteilhafteren Ausgestaltung des gesamten Kettentriebs führen kann.

Diese Aufgabe wird erfindungsgemäß bei einer Zahnkette der eingangs genannten Art dadurch gelöst, dass ein durch die beiden Außenflanken einer Zahnlasche vorgegebener Außenflankenwinkel $\alpha \geq 65°$ und $\leq 75°$ beträgt und ein Größenverhältnis $V_{Ba}$ zwischen einer Teilung T der Zahnkette und dem Außendurchmesser $d_{Ba}$ der Gelenkbolzen $\leq 2,65$ und $\geq 2,15$ beträgt. Bei einer 8mm-Kette beträgt demnach der größte wählbare Außendurchmesser $d_{Bamax} = 3,81$ mm. Dies garantiert auf der Basis einer geeigneten und durch die Teilung begrenzten Laschenlänge eine ausreichende Restdicke der Gelenkhülse.

Durch diesen gezielten konstruktiven Eingriff wird erreicht, dass die Zähne der Kettenräder stabiler ausgeführt werden können. Hierdurch kann die Zahnkette auch mit Kettenrädern in Eingriff gelangen, die eine verringerte Zähnezahl aufweisen. Eine Reduktion bis auf 18 Zähne am Kettenrad ist hierdurch möglich. Bei einer 8 mm-Kette beträgt somit der minimalst vorgegebene Außendurchmesser $d_{Ba}$ des Kettenbolzens 3,019 mm.

An dieser Stelle sei angemerkt, dass anstelle der Definition mittels des Außendurchmessers des Gelenkbolzens auch die Definition mittels des Innendurchmessers der Gelenkhülse erfolgen kann.

Aufgrund der geometrischen Gegebenheiten können gemäß einer Variante auch größere Außendurchmesser $d_{Ha}$ der Gelenkhülse gewählt werden. Hierzu kann ein Größenverhältnis $V_{Bi}$ zwischen einer Teilung T der Zahnkette und dem Außendurchmesser $d_{Ha}$ der Gelenkhülse von $\leq 1,85$ gewählt werden.

Damit eine ausreichende Restwandstärke der Lasche vorhanden ist, ist gemäß einer weiteren Variante vorgesehen, dass das Größenverhältnis $V_{Bi} \leq 1,85$ und $\geq 1,45$ beträgt. Die maximal zulässige Laschenlänge hängt maßgeblich von der Teilung ab, weshalb der Außendurchmesser $d_{Ha}$ der Gelenkhülse zwar möglichst groß sein sollte, aber einen gewissen Betrag aus Festigkeitsgründen nicht übersteigen darf. Gemäß dieser Vorgabe ist z.B. bei einer 8 mm-Zahnkette der größtmögliche Außendurchmesser $d_{Ha} = 5,517$ mm, wohingegen der kleinst wählbare Außendurchmesser 4,324 mm beträgt.

Bei einer besonders bevorzugten Ausführungsform ist vorgesehen, dass der Außenflankenwinkel $\alpha$ ca. 70° beträgt. Dieser Außenflankenwinkel hat sich als besonders günstig im Hinblick auf Festigkeitsüberlegungen herausgestellt. Insbesondere kann hierdurch auch in geeigneter Weise Einfluss auf die Festigkeit der Kettenräder genommen werden.

Des Weiteren kann das Außenkettenglied zwei jeweils außen auf den Gelenkbolzen angeordnete Führungslaschen aufweisen. Diese Führungslaschen führen dann die Zahnkette auf dem Kettenrad. Der Vorteil besteht darin, dass keine gesonderte Kettenradform erforderlich ist; allerdings baut diese Variante etwas breiter.

Bei einer anderen Ausführungsform ist vorgesehen, dass das Innenkettenglied mindestens eine auf den Gelenkhülsen angeordnete Führungslasche aufweist Zwar muss bei dieser Variante das Kettenrad eine geeignete Führungsnut aufweisen; allerdings baut diese Ausführungsform schmaler, da ein seitlicher Überstand über die Kettenradbreite hinaus nicht erforderlich ist.

Die Erfindung bezieht sich weiter auf Zahnketten, deren Innenkettenglieder keine Gelenkhülsen aufweisen, sondern die Gelenkbolzen unmittelbar in den Gelenköffnungen der Innenlaschen angeordnet sind. Demnach weisen die Innenkettenglieder mindestens eine Innenlasche und zwei sich quer durch diese erstreckende und von dieser gebildete Gelenköffnungen auf, die Außenkettenglieder weisen mindestens zwei Außenlaschen und mindestens zwei sich quer durch diese erstreckende Gelenkbolzen auf, wobei sich zum Bilden eines Kettengelenks jeweils ein Gelenkbolzen des Außenkettengliedes durch eine Gelenköffnung der mindestens einen Innenlasche des Innenkettengliedes erstreckt und mindestens eine Innenlasche des Innenkettengliedes und/oder eine Außenlasche des Außenkettengliedes als Zahnlasche mit jeweils zwei von jeweils einer Außenflanke und einer Innenflanke begrenzten Zähnen ausgebildet ist. Erfindungsgemäß ist hierbei vorgesehen, dass ein durch die beiden Außenflanken einer Zahnlasche vorgegebener Außenflankenwinkel $\alpha \geq 65°$ und $\leq 75°$ beträgt und ein Größenverhältnis $V_{Ba}$ zwischen einer Teilung T der Zahnkette und dem Außendurchmesser $d_{Ba}$ der Gelenkbolzen $\leq 2,0$, beträgt.

Bei einer 8 mm-Kette beträgt demnach der Außendurchmesser $d_{Ba}$ des Gelenkbolzens mindestens 3,636 mm bevorzugt mindestens 4 mm. Hierdurch lässt sich eine beträchtliche Vergrößerung der Gelenkfläche erzielen. Darüber hinaus sorgt der größere Außenflankenwinkel $\alpha$ für eine höhere Stabilität im Kettentrieb.

Bevorzugt beträgt das Größenverhältnis $V_{Ba} \leq$ 2,2 und $\geq 1,5$. Bei dieser Ausführungsform ist somit aus Laschenfestigkeitsgründen ein maximaler Außendurchmesser des Gelenkbolzens von 5,333 mm bei einer Zahnkette mit einer 8 mm-Teilung zugelassen.

Des Weiteren bezieht sich die Erfindung auf einen Kettentrieb mit mindestens zwei Kettenrädern und einer Zahnkette nach einem der Ansprüche 1 bis 8. Der Kettentrieb zeichnet sich dadurch aus, dass die Kettenräder einen Eingriffswinkel aufweisen, der im Wesentlichen dem Außenflankenwinkel $\alpha$ der Zahnlaschen entspricht und mindestens ein Kettenrad eine Zähnezahl von $\leq 20$ aufweist. Im Zusammenspiel mit der neuartigen Zahnkette wird ein Kettentrieb erzeugt, der zumindest bei einem Kettenrad stabilere Kettenradzähne erzeugt und bei mindestens einem anderen Kettenrad zu einer Reduktion der Kettenradzähne auf mindestens 20 führt. Bei Zahnketten mit einem Außeneingriffswinkel von 60° war die bislang wirtschaftlich vertretbare Untergrenze ca. bei 21 Zähnen.

Die Erfindung bezieht sich auch auf eine Zahnkettenbaureihe mit mindestens zwei Zahnketten gemäß einem der Ansprüche 1 bis 6, die eine unterschiedliche Teilung T aufweisen. In Frage kommen z.B. Zahnketten baugleicher Art mit den Teilungen 9,525 mm (3/8"), 8 mm und 7 mm. Die Zahnkettenbaureihe zeichnet sich dadurch aus, dass ein Außendurchmesser $d_{Ba}$ eines Gelenkbolzens dieser Zahnketten der Zahnkettenbaureihe wie folgt bestimmt wird:

$$d_{Ba} = 0{,}125 \times T^2 - 1{,}347 \times T + C,$$

wobei

T die Teilung der jeweiligen Zahnkette ist und

C ein sich in Abhängigkeit des Außeheingriffswinkels $\alpha$ bestimmender Wert ist, wobei C dem 2,1 bis 2,25-fachen von $\tan \alpha$ entspricht. Der Außendurchmesser des Gelenkbolzens wird demnach auf der Basis der Teilung T und des gewählten Außenflankenwinkels $\alpha$ bestimmt. Bei einer 8 mm-Zahnkette und einem Außenflankenwinkel $\alpha$ von 70° beträgt der Durchmesser $d_{Ba}$ minimal 2,994 mm und maximal 3,406 mm. Die anderen Teilungen weisen entsprechend bestimmte Minimal- und Maximalwerte für $d_{Ba}$ auf. Hierdurch ergibt sich für die gesamte Kettenbaureihe eine optimierte Zahnkettenlebensdauer, insbesondere für die Einsatzzwecke als Steuerkette bei einem Verbrennungsmotor. Eine jeweils optimierte Größe der Gelenkfläche, die vom Außendurchmesser $d_{Ba}$ und vom Außenflankenwinkel abhängt, wird erreicht. Entsprechend bezieht sich die Erfindung auch auf eine Zahnkettenbaureihe mit mindestens zwei Zahnketten gemäß einem der Ansprüche 7 oder 8, die eine unterschiedliche Teilung T aufweisen. Hierbei ist erfindungsgemäß vorgesehen, dass sich ein Außendurchmesser $d_{Ba}$ eines Gelenkbolzens dieser Zahnketten wie folgt bestimmt:

$$d_{Ba} = T - C,$$

wobei

T die Teilung der jeweiligen Zahnkette ist und

C ein sich in Abhängigkeit des Außeneingriffswinkels $\alpha$ bestimmender Wert ist, wobei C dem 1,27-1,3-fachen von $\tan \alpha$ entspricht. Bei einer 8 mm-Zahnkette ohne Gelenkhülsen beträgt der maximale Außendurchmesser des Gelenkbolzens bei einem Außenflankenwinkel von 70° demnach 4,511 mm und der minimale Durchmesser 4,428 mm. Auch hier erfolgt eine optimale Anpassung der Zahnkettenbaureihe, bei der das Kettengelenk aus Gelenköffnungen und Kettenbolzen besteht im Hinblick auf ihre verbesserte Haltbarkeit. Es sei angemerkt, dass die Abhängigkeit auch auf den Innendurchmesser der Gelenköffnung und nicht auf den Außendurchmesser des Gelenkbolzens bezogen sein kann. Wichtig ist einzig und allein eine Größe, durch die die Gelenkfläche aufgrund des Durchmessers beeinflusst ist.

Im Folgenden wird die Erfindung anhand mehrerer Ausführungsbeispiele näher erläutert. Es zeigen:

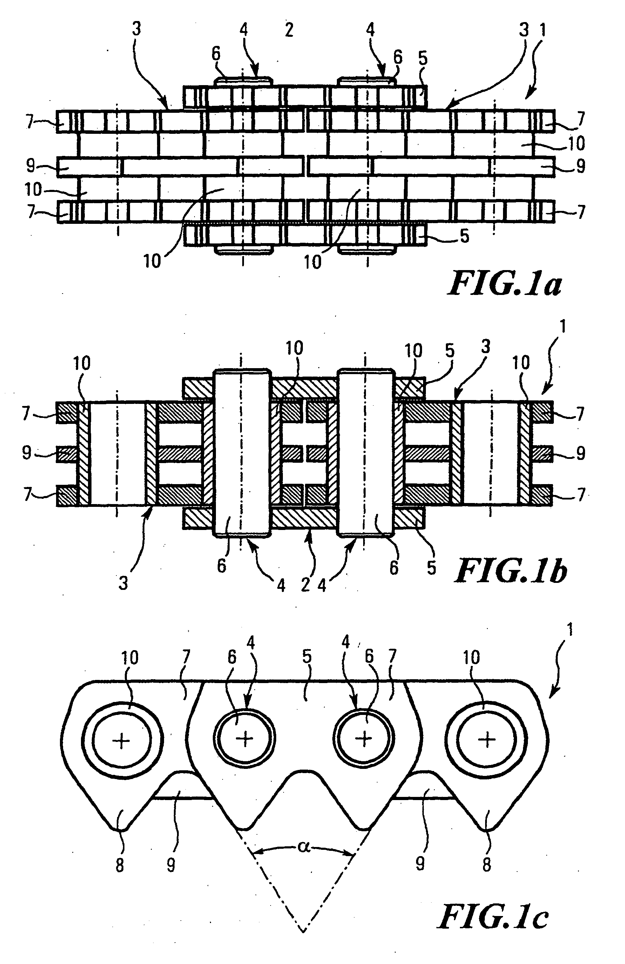

Fig. 1a eine Draufsicht auf einen Ausschnitt einer ersten Ausführungsform.

Fig. 1 b eine Schnittansicht der in Fig. 1a dargestellten Ausführungsform,

Fig. 1 c    eine Seitenansicht der in Fig. 1a gezeigten Ausführungsform,

Fig. 2    eine Draufsicht auf eine zweite Ausführungsform einer erfindungsgemäßen Zahnkette,

Fig. 3    eine Draufsicht auf eine dritte Ausführungsform einer erfindungsgemäßen Zahnkette,

Fig. 4    eine Draufsicht auf eine vierte Ausführungsform einer erfindungsgemäßen Zahnkette,

Fig. 5    eine Seitenansicht eines erfindungsgemäßen Kettenantriebs und einer erfindungsgemäßen Zahnkette,

Fig. 6    einen Schnitt durch ein Kettenrad des Kettentriebs aus Fig. 5 entlang der Linie VI-VI,

Fig. 7    eine Seitenansicht einer vierten Ausführungsform einer erfindungsgemäßen Zahnkette,

Fig. 8    eine Schnittansicht der in Fig. 7 dargestellten Zahnkette, und

Fig. 9    eine Schnittansicht einer fünften Ausführungsform einer Zahnkette.

Die in Fig. 1 dargestellte erfindungsgemäße Zahnkette 1 umfasst einander abwechselnd angeordnete Außenkettenglieder 2 und Innenkettenglieder 3, die über Kettengelenke 4 miteinander verbunden sind. Die Außenkettenglieder 2 bestehen aus jeweils außen angeordneten, parallel zueinander verlaufenden Außenlaschen 5 mit zueinander fluchtenden Öffnungen, in die jeweils ein Gelenkbolzen 6 eingepresst und vernietet ist.

Die Innenkettenglieder 3 sind zwischen den Außenlaschen 5 der Außenkettenglieder 2 positioniert und umfassen jeweils zwei Zahnlaschen 7, die parallel zueinander zu den Außenlaschen 5 angeordnet. Die Zahnlaschen 7 sind dabei versetzt zu den außen liegenden Außenlaschen 5 ausgerichtet. Weiter umfassen die Innenkettenglieder 3 eine Führungslasche 9 sowie jeweils zwei Gelenkhülsen 10. Die Führungslasche 9 ist dabei in der Mitte des Innenkettengliedes 3 angeordnet, während die zwei Zahnlaschen 7 außen an den Gelenkhülsen 10 angeordnet sind und mit den Stirnseiten der zylinderförmigen Gelenkhülsen 10 bündig abschließen. Sowohl die Führungslasche 9 als auch die beiden außen liegenden Zahnlaschen 7 sind mit Hülsenöffnungen versehen und auf die Gelenkhülsen 10 aufgepresst. Dabei ist auch die Führungslasche 9 senkrecht zu den Gelenkhülsen 10 und parallel zu beiden Zahnlaschen 7 angeordnet.

Jedes Kettengelenk 4 wird von dem Gelenkbolzen 6 des Außenkettengliedes 2 und der Zylinderöffnung der Gelenkhülse 10 gebildet. Dabei erstreckt sich die Gelenkfläche des Kettengelenks 4 ununterbrochen über die gesamte Innenfläche der Zylinderöffnung.

Jede Zahnlasche 7 des Innenkettenglieds 3 weist zwei einseitig angeordnete Zähne 8 auf, die zu einer die Lasche halbierenden Mittellinie (nicht gezeigt) spiegelsymmetrisch angeordnet sind. Die Zähne 8 weisen eine entsprechende Profilierung für den Eingriff in ein entsprechendes Kettenrad 12,13 auf. Dabei weisen die außen an den Zahnlaschen 7 vorgesehenen Außenflanken der Zähne 8 einen Außenflankenwinkel $\alpha$ von 70° (bevorzugt zwischen 65° und 75°) auf. Der Eingriff der Zähne 8 bzw. die Kraftübertragung auf die Kettenräder 12,13 erfolgt dabei im Wesentlichen über die Außenflanken. Des Weiteren weist jede Zahnlasche 7 zwei in einem vorbestimmten Abstand zueinander angeordnete Hülsenöffnungen auf, in denen jeweils im Betrieb eine entsprechende Gelenkhülse 10 aufgenommen ist.

Die Außenlaschen 5 des Außenkettengliedes 2 können in ähnlicher Weise wie die Zahnlaschen 7 mit Zähnen 8 zum Eingriff in ein Kettenrad 12,13 ausgebildet, sein. In einer anderen Ausführungsform können die Außenlachen 5 bzw. die jeweils außen angeordneten Außenlachen des Außenkettengliedes, ähnlich den Führungslaschen 9 zur Führung der Zahnkette 1 ausgebildet sein.

Die Führungslaschen 9 sind in der in Fig. 1a bis 1c dargestellten Ausführungsform als einfache Kettenlaschen in einer herkömmlichen Ausgestaltung ausgebildet. Eine solche Standard-Laschenform weist neben den in Kettenlaufrichtung an den Stirnseiten angeordneten Gelenköffnungen abgerundete Stirnseiten mit einem konstanten Abstand zu den Gelenköffnungen sowie gerade Seitenkanten auf, die die halbkreisförmigen Stirnseiten miteinander verbinden. Im Gegensatz zu den Zahnlaschen 7 und den Außenlaschen 5, bei denen die Materialstärke, d.h. die Dicke der Lasche, im Wesentlichen von den Anforderungen zur Kraftübertragung abhängen, ist die Dicke der Führungslasche 9 deutlich kleiner und erreicht nur ca. 62,5 % der Dicke der Zahnlaschen 7 und/oder Außenlaschen 5. Bei der üblichen Laschendicke von 1,6 mm weist die Führungslasche 9 eine entsprechende Dicke von ca. 1,0 mm auf.

Da sich der Abstand der Zahnlaschen 7 des Innenkettenglieds 3, und damit auch der Abstand der außen liegenden Zahnlaschen 7 zur mittig angeordneten Führungslasche 9, durch die axiale Länge (in Gelenkbolzenrichtung) der Gelenkhülsen 10 bestimmt, sind die mittig angeordnete Führungslasche 9 und die außen liegenden Zahnlaschen 7 voneinander beabstandet. Dabei ergibt sich der Abstand im Wesentlichen aus der Länge der Gelenkhülsen 10, die vorzugsweise der Hülsenlänge einer herkömmlichen Gelenkkette entspricht und der Dicke der Zahnlaschen 7 sowie der Führungslache 9.

Bei der in Fig. 1 dargestellten Ausführungsform ist beiderseits jeweils eine Außenlasche 5 mit Zähnen 8 neben einer Zahnlasche 7 des Innenkettenglieds 3 angeordnet. Die Zahnkette weist eine Teilung T auf. üblicherweise werden als Teilung T im Automobilbereich (z.B. Steuerkette an einem Verbrennungsmotor) 7 mm, 8 mm und 9,25 mm (3/8") eingesetzt. Der Durchmesser $d_{Ba}$ (Außendurchmesser) des Gelenkbolzens 6 kann gegenüber herkömmlichen Zahnketten aufgrund des veränderten Außenflankenwinkels $\alpha$ (hier 70°) optimiert werden. Ein Größenverhältnis $V_{Ba}$ zwischen einer Teilung T der Zahnkette und dem Außendurchmesser $d_{Ba}$ der Gelenkbolzen beträgt dabei $\leq$ 2,65. Das bedeutet, dass bei einer Teilung 7 mm der kleinst wählbare Außendurchmesser $d_{Ba}$ = 2,642 mm, bei einer 8 mm-Teilung 3,019 mm und bei einer 9,525 mm-Teilung 3,594 mm beträgt. Aus Festigkeitsgründen ist auch eine bevorzugte Obergrenze für den Außendurchmesser $d_{Ba}$ angegeben. Hierzu beträgt das Größenverhältnis $V_{Ba}$ minimal 2, 15.

Die Gelenkhülsen 10 weisen einen Außendurchmesser $d_{Ha}$ auf. Bei einer Teilung von 9,525 mm beträgt dieser z.B. 6,35 mm und bei einer Teilung 8 mm ergeben sich für diesen 5 mm. Das Größenverhältnis $V_{Bi}$ zwischen der Teilung und dem Außendurchmesser $d_{Ha}$ der Gelenkhülsen 10 bewegt sich demnach zwischen 1,85 und 1,45.

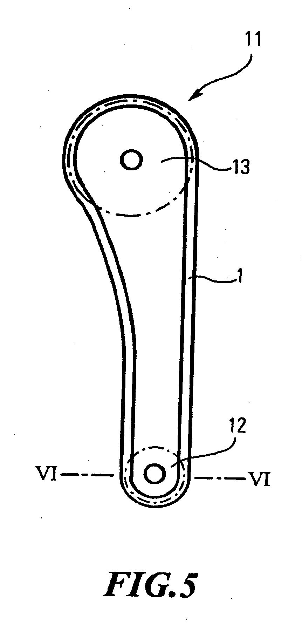

Die Fig. 5 zeigt eine schematische Seitenansicht eines Kettentriebs 11. In diesem Kettentrieb 11 ist eine erfindungsgemäße Zahnkette 1 um ein Antriebskettenrad 12 und ein Abtriebskettenrad 13 herumgelegt entsprechend der üblichen Anordnung für einen Steuerkettentrieb eines Verbrennungsmotors. Der schematisch dargestellte Kettentrieb 11 benötigt in einer üblichen Ausführung zum Betrieb in dem Verbrennungsmotor noch eine Spannschiene und einen Kettenspanner, die in der Fig. 5 nicht dargestellt sind. Zur Aufnahme der auf dem Innenkettenglied angeordneten Führungslasche 9 weist sowohl das Antriebskettenrad 12 als auch das Abtriebskettenrad 13 eine umlaufende Nut 14 auf, die die Zähne 15 des Kettenrads 12,13 teilt.

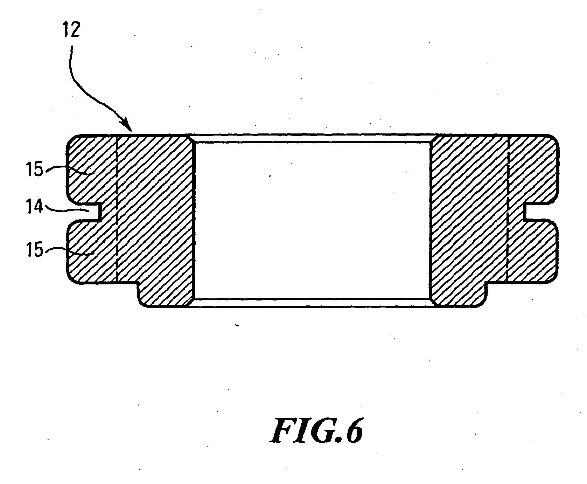

Fig. 6 zeigt einen Schnitt durch das Antriebskettenrad 12 mit einer die Zähnen 15 im Wesentlichen mittig teilenden Nut 14, in der eine mittig zwischen den Zähnelaschen 7 des Innenkettenglieds 3 angeordneten Führungslasche 9, entsprechend der Zahnkette 1 aus den Fig. 1a bis 1c aufgenommen wird.

Das Kettenrad 12 weist einen Eingriffswinkel von 70° auf, der im Wesentlichen dem Außeneingriffswinkel $\alpha$ der Zahnlaschen 5 und 7 entspricht. Die Zahnlaschen sitzen nämlich mit den Außenflanken auf den Zähnen des Kettenrades auf. Aufgrund dieses gewählten Flankenwinkels ist die Zähnezahl des Antriebskettenrades 12 auf unter 20, hier 18, reduziert.

Die in den Fig. 1a bis 1c dargestellte Ausführungsform kann im Rahmen einer Zahnkettenbaureihe angewendet werden. Baugleich werden demnach derartige Zahnketten mit einer Teilung von 7 mm, 8 mm und 9,525 mm (3/8") ausgestaltet. Eine Optimierung der Zahnkettenbaureihe wird dadurch erzielt, dass der Außendurchmesser $d_{Ba}$ der Gelenkbolzen 6 dieser Zahnketten sich wie folgt bestimmt:

$$d_{Ba} = 0{,}125 \times T^2 - 1{,}347 \times T + C,$$

wobei

T die Teilung der Zahnkette ist und

C ein sich in Abhängigkeit des Außeneingriffswinkels $\alpha$ bestimmender Wert ist, wobei C dem 2,1 bis 2,25-fachen von tan $\alpha$ entspricht. Eine Baureihe mit einem Außeneingriffswinkel von 70°, den Teilungen 7 mm, 8 mm und 9,525 mm und den entsprechend zugeordneten Außendurchmessern $d_{Ba}$ von 2,67 mm, 3,315 mm und 4,41 mm, erfüllt diese Bedingung.

Beim Betrieb des Kettentriebs 11 wird die Zahnkette 1 durch das Antriebskettenrad 12 angetrieben. Dabei greifen sowohl die Zahnlaschen 7 mit ihren Zähnen 8 als auch die Zähne der Außenlaschen 5 in die Kettenradzähne 15 des Antriebskettenrads 12 ein. Die Führung der Zahnkette wird durch die Führungslaschen 9 sichergestellt, die in die Nut 14 eingreift und ein seitliches Herauswandern der Zahnkette 1 vom Antriebskettenrad 12 und Abtriebskettenrad 13 verhindert. Die durch das Antriebskettenrad 12 auf die Zahnkette 1 zu übertragende Kraft wird von der Zahnkette 1 am Abtriebskettenrad 13 wieder abgegeben und dort an ein angekoppeltes Modul (z.B. eine Nockenwelle) übertragen. Durch den veränderten Außenflankenwinkel $\alpha$ und die Optimierung der Gelenkfläche ergibt sich eine verbesserte Dauerhaltbarkeit der Zahnkette gegenüber herkömmlichen Zahnketten.

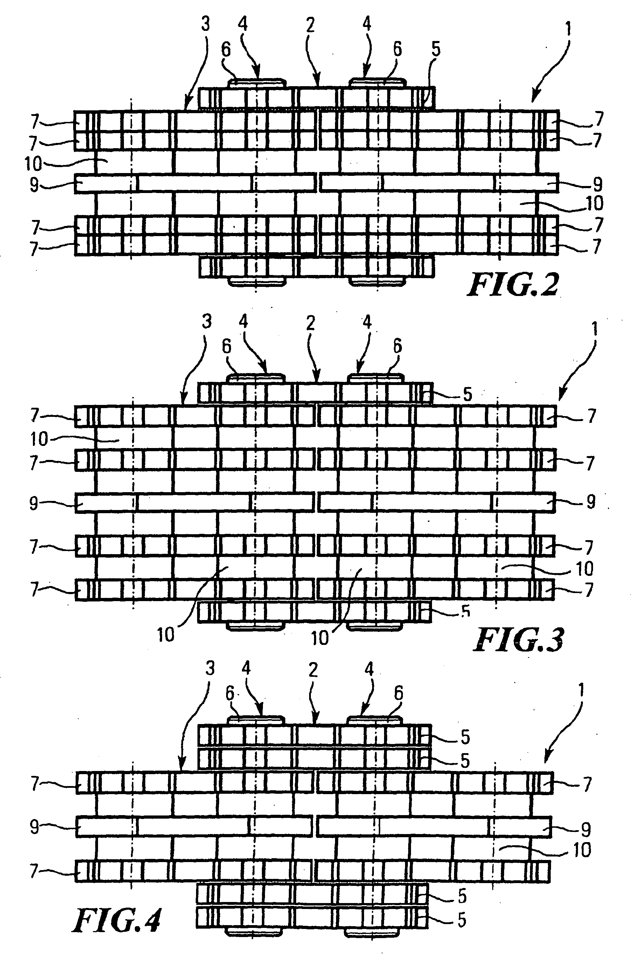

In Fig. 2 ist eine zweite Ausführungsform der Zahnkette 1 dargestellt. Bei dieser Ausführungsform sind an den Stirnseiten der Gelenkhülsen 10 jeweils zwei Zahnlaschen 7 nebeneinander als Paket angeordnet. Dabei ist der Abstand zwischen den außen liegenden Zahnlaschen 7 und der Führungslache 9 gegenüber der Ausführungsform aus Fig. 1 unverändert. Es ist jedoch auch eine Ausgestaltung der Zahnkette 1 möglich, bei der die axiale Länge der Gelenkhülse 10 unverändert bleibt und dafür der Abstand zwischen der Führungslasche 9 und den Zahnlaschen 7 sich um die Dicke der zusätzlich aufgepressten Zahnlache 7 verringert.

Fig. 3 zeigt eine dritte Ausführungsform der Zahnkette 1, bei der ebenfalls auf beiden Seiten der Führungslasche 9 eine weitere Zahnlasche 7 auf der Gelenkhülse 10 des Innenkettengliedes 3 angeordnet ist. Bei dieser Ausführungsform ist sowohl zwischen der Führungslasche 9 und der benachbarten Zahnlasche 7 als auch zwischen den jeweils auf einer Seite der Führungslasche 9 angeordneten Zahnlaschen 7 ein Abstand vorgesehen. Dabei können die Abstände zwischen den Zahnlaschen 7 und gegenüber der Führungslasche 9 gleich oder unterschiedlich sein. Darüber hinaus ist auch eine Ausführungsform einer erfindungsgemäßen Zahnkette 1 mit einem Laschenpaket aus aneinander anliegenden Führungslaschen 9 und Zahnlaschen 7 denkbar.

Die in Fig. 4 dargestellte vierte Ausführungsform der Zahnkette 1 zeigt ein Außenkettenglied 2, bei dem auf jedem Ende der Gelenkbolzen 6 nebeneinander zwei Außenlaschen als Paket aufgepresst sind. Dabei können die als Paket nebeneinander angeordneten Außenlaschen sowohl beide als Zahnlaschen, aber auch als eine Zahnlasche und eine außen liegende Führungslasche ausgebildet sein. Zwar sind die in Fig. 4 dargestellten Außenlaschen in einer gegenüber den Zahnlaschen 7 des Innenkettenglieds 3 gleichen Dicke dargestellt, jedoch können die Außenlaschen 5 in dieser Ausführungsform auch dünner ausgebildet sein und/oder um ein vorbestimmtes Maß voneinander beabstandet sein.

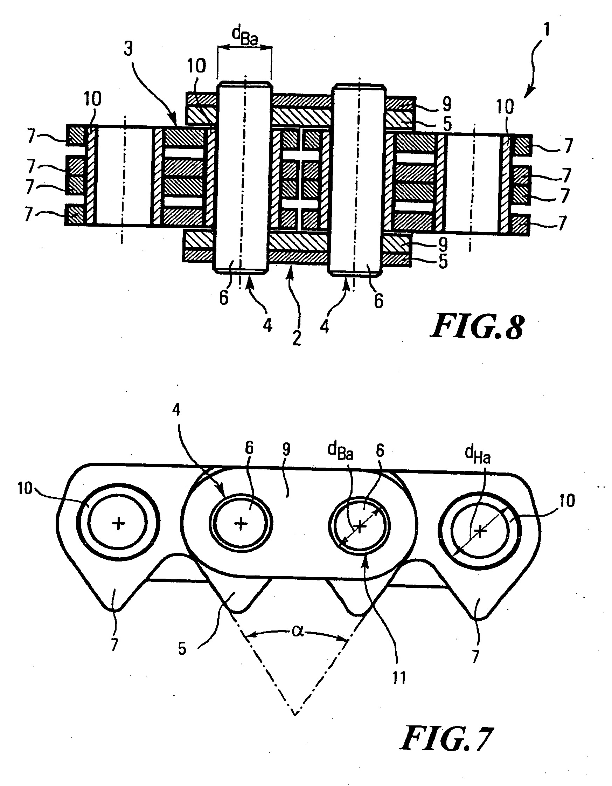

Im Folgenden wird anhand der Fig. 7 und 8 ein fünftes Ausführungsbeispiel der erfindungsgemäßen Zahnkette 1 näher beschrieben. Es wird nur auf die wesentlichen Unterschiede eingegangen, so dass für bau- und wirkungsgleiche Elemente die gleichen Bezugsziffern verwendet werden und auf die obige Beschreibung verwiesen wird. Diese Zahnkette 1 unterscheidet sich hauptsächlich dadurch, dass sie zwei Führungslaschen 9 aufweist, die außen jeweils auf die Endabschnitte der Gelenkbolzen 6 aufgepresst sind. Jedes Außenkettenglied 2 besteht demnach aus zwei Gelenkbolzen 6, zwei Außenzahnlaschen 5 und zwei Führungslaschen 9.

Das zugehörige Innenkettenglied 3 besteht aus zwei Gelenkhülsen 10 und vier auf diese aufgepressten Zahnlaschen 7. Zwei der Zahnlaschen 7 sind als Laschenpaket in der Mitte der Gelenkhülsen 10 angeordnet, während die zwei übrigen Zahnlaschen 7 jeweils an den Enden der Gelenkhülsen 10 aufgepresst sind. Die Größenverhältnisse und die Baugruppenvorgaben sind identisch zu den vorangegangenen Ausführungsbeispielen.

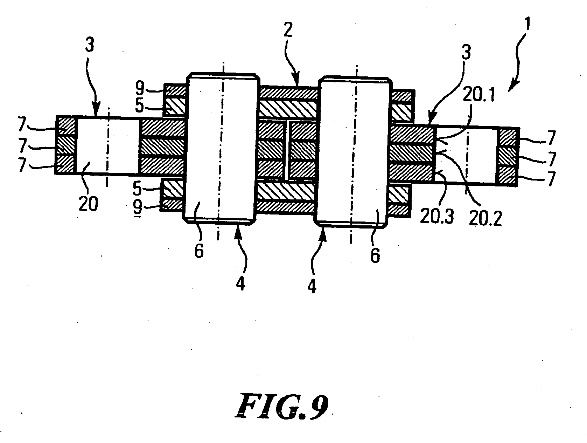

Im Folgenden wird anhand der Fig. 9 ein sechstes Ausführungsbeispiel näher erläutert. Dieses Ausführungsbeispiel unterscheidet sich von den vorangegangen Ausführungsbeispielen hauptsächlich dadurch, dass keine Gelenkhülsen verwendet werden. Die größer ausgestalteten Gelenkbolzen 6 sind unmittelbar in den Gelenköffnungen 20 der Zahnlaschen 7 aufgenommen. Im vorliegenden Fall besteht das Innenkettenglied 3 aus drei zu einem Paket nebeneinander angeordneten Zahnlaschen 7 mit einem Außeneingriffswinkel $\alpha$ von 70° (bevorzugt zwischen 65 und 75°).

Ein Außenkettenglied 2 besteht aus zwei parallel zueinander angeordneten Gelenkbolzen 6, zwei seitlich jeweils außen neben den Innenlaschen 7 angeordneten Zahnlaschen 5 und den auf die Endabschnitte der Gelenkbolzen 6 aufgepressten Führungslaschen 9. Die durch die drei Innenzahnlaschen 7 gebildete Gelenköffnung weist ein geringes Spiel zu den darin eingesteckten Gelenkbolzen 6 auf, so dass ein Kettengelenk 4 gebildet ist.

Der Außendurchmesser $d_{Ba}$ der Gelenkbolzen 6 ist so gewählt, dass ein Größenverhältnis $V_{Ba}$ zwischen der Teilung T und dem Außendurchmesser $\leq 2,0$ beträgt. Bei einer 8 mm-Teilung beträgt der Durchmesser $d_{Ba}$ bei einer Ausführungsform 4,44 mm und bei einer Teilung von 9,525 mm (3/8") ist $d_{Ba} = 6$ mm. Bei beiden Teilungen T ist somit die Bedingung erfüllt. Eine derartig ausgestaltete Zahnkettenbaureihe von baugleichen Zahnketten unterschiedlicher Teilung T erfüllt somit auch die folgende Vorgabe:

$$d_{Ba} = T - C,$$

wobei

T die Teilung der Zahnkette ist und

C ein sich in Abhängigkeit des Außeneingriffswinkels $\alpha$ bestimmender Wert ist, wobei C dem 1,27 -1,3- fachen von tan $\alpha$ entspricht. Bei einer Teilung von 8 mm beträgt demnach der maximal zulässige Außendurchmesser $d_{Ba}$ eines Gelenkbolzens 4,511 mm und der minimal gewünschte 4,428 mm. Bei einer Teilung von 9,525 mm (3/8") beträgt der Maximalwert von $d_{Ba}$ aus Festigkeitsgründen 6,036 mm und der Minimalwert 5,953 mm. Diese Werte sind sämtlich auf einen Außenflankenwinkel $\alpha$ von 70° bezogen.

Durch diese Vorgaben entsteht eine möglichst große Gelenkfläche und zusätzlich ein stabilerer Kettentrieb durch verstärkte Kettenradzähne. Auch hier könnte die Abhängigkeit von dem Innendurchmesser der Gelenköffnung 20 bestimmt werden, weil diese zusammen mit dem Durchmesser $d_{Ba}$ das Kettengelenk definieren.

**Patentansprüche**

1. Zahnkette (1) mit sich abwechselnden und jeweils mittels eines Kettengelenks (4) miteinander verbundenen Innen- und Außenkettengliedern (2,3), wobei die Innenkettenglieder (3) mindestens eine Innenlasche (7) und mindestens zwei sich quer durch diese erstreckende Gelenkhülsen (10) aufweisen, die Außenkettenglieder (2) mindestens zwei Außenlaschen (5) und mindestens zwei quer durch diese erstreckende Gelenkbolzen (6) aufweisen und sich zum Bilden eines Kettengelenks (4) jeweils ein Gelenkbolzen (6) des Außenkettengliedes (2) durch eine Gelenkhülse (10) des Innenkettengliedes (3) erstreckt, und mindestens eine Innenlasche (7) des Innenkettengliedes (3) und/oder mindestens eine Außenlasche (5) des Außenkettengliedes (2) als Zahnlasche mit jeweils zwei von jeweils einer Außenflanke und einer innenflanke begrenzten Zähnen ausgebildet ist, **dadurch gekennzeichnet, dass** ein durch die beiden Außenflanken einer Zahnlasche (5,7) vorgegebener Außenflankenwinkel $\alpha \geq$ 65° und $\leq 75°$ beträgt und ein Größenverhältnis $V_{Ba}$ zwischen einer Teilung T der Zahnkette (1) und dem Außendurchmesser $d_{Ba}$ der Gelenkbolzen $\leq 2,65$ und $\geq 2,15$ beträgt.

2. Zahnkette (1) nach Anspruch 1, **dadurch gekenn-**

**zeichnet, dass** ein Größenverhältnis $V_{Bi}$ zwischen einer Teilung T der Zahnkette (1) und dem Außendurchmesser $d_{Ha}$ der Gelenkhülse $\leq 1,85$ beträgt.

3. Zahnkette (1) nach Anspruch 2, **dadurch gekennzeichnet, dass** das Größenverhältnis $V_{Bi} \leq 1,85$ und $\geq 1,45$ beträgt.

4. Zahnkette (1) nach einem der Ansprüche 1 bis 3, **dadurch gekennzeichnet, dass** der Außenflankenwinkel $\alpha$ ca. 70° beträgt.

5. Zahnkette (1) nach einem der Ansprüche 1 bis 4, **dadurch gekennzeichnet, dass** das Außenkettenglied (2) zwei jeweils außen auf dem Gelenkbolzen (6) angeordnete Führungslaschen (9) aufweist.

6. Zahnkette (1) nach einem der Ansprüche 1 bis 4, **dadurch gekennzeichnet, dass** das Innenkettenglied (3) mindestens eine auf den Gelenkhülsen (10) angeordnete Führungslasche (9) aufweist.

7. Zahnkette (1) mit sich abwechselnden und jeweils mittels eines Kettengelenks (4) miteinander verbundenen Innen- und Außenkettengliedem (2,3), wobei die Innenkettenglieder (3) mindestens eine innenlasche (7) und zwei sich quer durch diese erstreckende und von dieser gebildete Gelenköffnungen (20) aufweisen, die Außenkettenglieder (2) mindestens zwei Außenlaschen (5) und mindestens zwei quer durch diese erstreckende Gelenkbolzen (6) aufweisen und sich zum Bilden eines Kettengelenks (4) jeweils ein Gelenkbolzen (6) des Außenkettengliedes (2) durch eine Gelenköffnung (20) der mindestens einen Innenlasche (7) des Innenkettengliedes (3) erstreckt, mindestens eine Innenlasche (7) des Innenkettengliedes (3) und/oder eine Außenlasche (5) des Außenkettengliedes (2) als Zahnlasche mit jeweils zwei von jeweils einer Außenflanke und einer Innenflanke begrenzten Zähnen ausgebildet ist und ein durch die beiden Außenflanken einer Zahnlasche vorgegebener Außenflankenwinkel $\alpha \geq 65°$ und $\leq 75°$ beträgt, **dadurch gekennzeichnet, dass** ein Größenverhältnis $V_{Ba}$ zwischen einer Teilung T der Zahnkette (1) und einen Außendurchmesser ($d_{Ba}$) der Gelenkbolzen (6) $\leq 2,0$, beträgt.

8. Zahnkette (1) nach Anspruch 7, **dadurch gekennzeichnet, dass** das Größenverhältnis $V_{Ba} \leq 2,0$ und $\geq 1,5$ beträgt.

9. Kettentrieb mit mindestens zwei Kettenrädern (12,13) und einer Zahnkette (1) nach einem der Ansprüche bis 8, **dadurch gekennzeichnet, dass** die Kettenräder (12,13) einen Eingriffswinkel aufweisen, der im wesentlichen dem Eingriffswinkel $\alpha$ der Zahnlaschen der Zahnkette (1) entspricht und mindestens ein Kettenrad (12) eine Zähnezahl von $\leq 20$

aufweist.

10. Zahnkettenbaureihe mit mindestens zwei Zahnketten (1) gemäß einem der Ansprüche 1 bis 6, die eine unterschiedliche Teilung T aufweisen, **dadurch gekennzeichnet, dass** sich ein Außendurchmesser ($d_{Ba}$) eines Gelenkbolzens (6) dieser Zahnketten (1) wie folgt bestimmt:

$$d_{Ba} = 0,125 \times T^2 - 1,347 \times T + C,$$

wobei
T die Teilung der Zahnkette (1) ist und
C ein sich in Abhängigkeit des Außeneingriffswinkels $\alpha$ bestimmender Wert ist, wobei C dem 2,1 bis 2,25-fachen von tan $\alpha$ entspricht.

11. Zahnkettenbaureihe mit mindestens zwei Zahnketten (1) gemäß einem der Ansprüche 7 oder 8, die eine unterschiedliche Teilung T aufweisen, **dadurch gekennzeichnet, dass** sich ein Außendurchmesser ($d_{Ba}$) eines Gelenkbolzens (6) dieser Zahnketten (1) wie folgt bestimmt

$$d_{Ba} = T - C,$$

wobei
T die Teilung der Zahnkette (1) ist und
C ein sich in Abhängigkeit des Außeneingriffswinkels $\alpha$ bestimmender Wert ist, wobei C dem 1,7- 1,3-fachen von tan $\alpha$ entspricht.

**Claims**

1. Toothed chain (1) with alternating inner and outer chain links (2, 3) each joined by means of a chain joint (4), wherein the inner chain links (3) comprise at least one inner plate (7) and at least two joint bushes (10) running across the same, the outer chain links (2) comprise at least two outer plates (5) and at least two joint pins (6) running across the same, and to form a chain joint (4), a joint pin (6) of the outer chain link (2) each extends through a joint bush (10) of the inner chain link (3), and at least one inner plate (7) of the inner chain link (3) and/or at least one outer plate (5) of the outer chain link (2) is embodied as a toothed plate with each two teeth defined by an outer flank and an inner flank each, **characterized in that** an external flank angle given for the two external flanks of a toothed plate (5, 7), is $\alpha \geq 65°$ and $\leq 75°$, and a ratio $V_{Ba}$ between a pitch T of the toothed chain (1) and the outer diameter $d_{Ba}$ of the joint pins is $\leq 2.65$ and $\geq 2.15$.

**2.** Toothed chain (1) according to claim 1, **characterized in that** a ratio $V_{Bi}$ between a pitch T of the toothed chain (1) and the outer diameter $d_{Ha}$ of the joint bush is $\leq 1.85$.

**3.** Toothed chain (1) according to claim 2, **characterized in that** the ratio $V_{Bi}$ is $\leq 1.85$ and $\geq 1.45$.

**4.** Toothed chain (1) according to one of claims 1 to 3, **characterized in that** the external flank angle $\alpha$ is approx. 70°.

**5.** Toothed chain (1) according to one of claims 1 to 4, **characterized in that** the outer chain link (2) comprises two guide plates (9) each arranged externally on the joint pin (6).

**6.** Toothed chain (1) according to one of claims 1 to 4, **characterized in that** the inner chain link (3) comprises at least one guide plate (9) arranged on the joint bushes (10).

**7.** Toothed chain (1) with alternating inner and outer chain links (2, 3) each joined by means of a chain joint (4), wherein the inner chain links (3) comprise at least one inner plate (7) and two joint openings (20) running across and being formed by the same, the outer chain links (2) comprise at least two outer plates (5) and at least two joint pins (6) running across the same, and to form a chain joint (4), a joint pin (6) of the outer chain link (2) each extends through a joint opening (20) of the at least one inner plate (7) of the inner chain link (3), at least one inner plate (7) of the inner chain link (3) and/or an outer plate (5) of the outer chain link (2) is embodied as a toothed plate with each two teeth defined by an outer flank and an inner flank each, and an external flank angle given for the two external flanks of a toothed plate is $\alpha \geq 65°$ and $\leq 75°$, **characterized in that** a ratio $V_{Ba}$ between a pitch T of the toothed chain (1) and an outer diameter ($d_{Ba}$) of the joint pins (6) is $\leq 2.0$.

**8.** Toothed chain (1) according to claim 7, **characterized in that** the ratio $V_{Ba}$ is $\leq 2.0$ and $\geq 1.5$.

**9.** Chain drive with at least two chain wheels (12, 13) and a toothed chain (1) according to one of claims 1 to 8, **characterized in that** the chain wheels (12, 13) comprise a pressure angle which essentially corresponds to the pressure angle $\alpha$ of the toothed plates of the toothed chain (1) and at least one chain wheel (12) has a number of teeth of $\leq 20$.

**10.** Toothed chain set with at least two toothed chains (1) according to one of claims 1 to 6 having a different pitch T, **characterized in that** an outer diameter ($d_{Ba}$) of a joint pin (6) of these toothed chains (1) is determined as follows:
$d_{Ba} = 0.125 \times p^2 - 1.347 \times T + C$, wherein
T is the pitch of the toothed chain (1), and
C is a value determined depending on the outer pressure angle $\alpha$, wherein C corresponds to the 2.1 to 2.25-fold of tan $\alpha$.

**11.** Toothed chain set with at least two toothed chains (1) according to one of claims 7 or 8 having different pitches T, **characterized in that** an outer diameter ($d_{Ba}$) of a joint pin (6) of these toothed chains (1) is determined as follows:

$$d_{Ba} = T - C,$$

wherein
T is the pitch of the toothed chain (1), and
C is a value determined depending on the outer pressure angle $\alpha$, wherein C corresponds to the 1.7 to 1.3-fold of tan $\alpha$.

## Revendications

**1.** Chaîne dentée (1) avec des éléments de chaîne intérieurs et extérieurs (2, 3) en alternance et reliés les uns aux autres respectivement au moyen d'une articulation de chaîne (4), dans laquelle les éléments de chaîne intérieurs (3) présentent au moins une éclisse intérieure (7) et au moins deux douilles articulées (10) s'étendant transversalement à celles-ci, les éléments de chaîne extérieurs (2) présentent au moins deux éclisses extérieures (5) et au moins deux boulons articulés (6) s'étendant transversalement à celles-ci et pour la formation d'une articulation de chaîne (4), respectivement un boulon articulé (6) de l'élément de chaîne extérieur (2) s'étend au travers d'une douille articulée (10) de l'élément de chaîne intérieur (3), et au moins une éclisse intérieure (7) de l'élément de chaîne intérieur (3) et/ou au moins une éclisse extérieure (5) de l'élément de chaîne extérieur (2) est réalisée comme une éclisse dentée avec respectivement deux dents délimitées par respectivement un flanc extérieur et un flanc intérieur, **caractérisée en ce qu'**un angle d'engrenage extérieur $\alpha$ décrit par les deux flancs extérieurs d'une éclisse dentée est $\geq$ à 65 ° et $\leq$ à 75 ° et un rapport de grandeur $V_{Ba}$ entre un pas T de la chaîne dentée (1) et le diamètre extérieur $d_{Ba}$ des boulons articulés est $\leq$ à 2,65 et $\geq$ à 2,15.

**2.** Chaîne dentée (1) selon la revendication 1, **caractérisée en ce qu'**un rapport de grandeur $V_{Bi}$ entre un pas T de la chaîne dentée (1) et le diamètre extérieur $d_{Ha}$ de la douille articulée est $\leq$ à 1,85.

**3.** Chaîne dentée (1) selon la revendication 2, **caractérisée en ce que** le rapport de grandeur $V_{Bi}$ est $\leq$ à 1,85 et $\geq$ à 1,45.

**4.** Chaîne dentée (1) selon l'une quelconque des revendications 1 à 3, **caractérisée en ce que** l'angle d'engrenage extérieur $\alpha$ s'élève à environ 70 °.

**5.** Chaîne dentée (1) selon l'une quelconque des revendications 1 à 4, **caractérisée en ce que** l'élément de chaîne extérieur (2) présente deux éclisses de guidage (9) disposées respectivement à l'extérieur sur le boulon articulé (6).

**6.** Chaîne dentée (1) selon l'une quelconque des revendications 1 à 4, **caractérisée en ce que** l'élément de chaîne intérieur (3) présente au moins une éclisse de guidage (9) disposée sur les douilles articulées (10).

**7.** Chaîne dentée (1) avec des éléments de chaîne intérieurs et extérieurs (2, 3) en alternance et reliés les uns aux autres respectivement au moyen d'une articulation de chaîne (4), dans laquelle les éléments de chaîne intérieurs (3) présentent au moins une éclisse intérieure (7) et deux ouvertures articulées (20) s'étendant transversalement à celle-ci et formées par celle-ci, les éléments de chaîne extérieurs (2) présentent au moins deux éclisses extérieures (5) et au moins deux boulons articulés (6) s'étendant transversalement à celles-ci et pour la formation d'une articulation de chaîne (4), respectivement un boulon articulé (6) de l'élément de chaîne extérieur (2) s'étend au travers d'une ouverture articulée (20) de l'élément de chaîne intérieur (3), au moins une éclisse intérieure (7) de l'élément de chaîne intérieur (3) et/ou une éclisse extérieure (5) de l'élément de chaîne extérieur (2) est réalisée comme une éclisse dentée avec respectivement deux dents délimitées par respectivement un flanc extérieur et un angle d'engrenage extérieur $\alpha$ décrit par les deux flancs extérieurs d'une éclisse dentée est $\geq$ à 65 ° et $\leq$ à 75 °, **caractérisée en ce qu'**un rapport de grandeur $V_{Ba}$ entre un pas T de la chaîne dentée (1) et un diamètre extérieur $d_{Ba}$ des boulons articulés est $\leq$ à 2,0.

**8.** Chaîne dentée (1) selon la revendication 7, **caractérisée en ce que** le rapport de grandeur $V_{Ba}$ est $\leq$ à 2,0 et $\geq$ à 1,5.

**9.** Transmission par chaîne avec au moins deux roues à chaîne (12, 13) et une chaîne dentée (1) selon l'une quelconque des revendications 1 à 8, **caractérisée en ce que** les roues à chaîne (12, 13) présentent un angle d'engrenage qui correspond essentiellement à l'angle d'engrenage $\alpha$ des éclisses dentées de la chaîne dentée (1) et au moins une roue à chaîne (12) présente un nombre de dents $\leq$ à 20.

**10.** Série de chaînes dentées avec au moins deux chaînes dentées (1) selon l'une quelconque des revendications 1 à 6, qui présentent un pas T différent, **caractérisée en ce qu'**un diamètre extérieur ($d_{Ba}$) d'un boulon articulé (6) de ces chaînes dentées (1) se détermine comme suit :

$$d_{Ba} = 0,125 \text{ x } T^2 - 1,347 \text{ x } T + C,$$

où
T est le pas de la chaîne dentée (1) et
C est une valeur se déterminant en fonction de l'angle d'engrenage extérieur $\alpha$, sachant que C correspond à 2,1 à 2,25 fois $\tan \alpha$.

**11.** Série de chaînes dentées avec au moins deux chaînes dentées (1) selon l'une quelconque des revendications 7 ou 8, qui présentent un pas T différent, **caractérisée en ce qu'**un diamètre extérieur ($d_{Ba}$) d'un boulon articulé (6) de ces chaînes dentées (1) se détermine comme suit :

$$d_{Ba} = T - C,$$

où
T est le pas de la chaîne dentée (1) et
C est une valeur se déterminant en fonction de l'angle d'engrenage extérieur $\alpha$, sachant que C correspond à 1,7 à 1,3 fois $\tan \alpha$.

*FIG.1a*

*FIG.1b*

*FIG.1c*

*FIG.2*

*FIG.3*

*FIG.4*

**FIG.5**

**FIG.6**

FIG.8

FIG.7

**FIG.9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2373833 B
- EP 1293704 A2